# FASCICULE DE BREVET EUROPEEN

(11) **EP 0 875 984 B1**
(45) Date de publication et mention de la délivrance du brevet: **02.10.2002**
(21) Numéro de dépôt: 98410044.6
(22) Date de dépôt: 28.04.1998
(51) Int. Cl.: H02M 5/257

(54) **Gradateur de puissance**
Dimmer
Dimmer

(30) Priorité: 29.04.1997 FR 9705593
(43) Date de publication de la demande: 04.11.1998
(73) Titulaire: STMicroelectronics S.A., 92120 Montrouge (FR)
(72) Inventeur: Peron, Benoit, 37100 Tours (FR)
(74) Mandataire: de Beaumont, Michel

(56) Documents cités:
- GB-A- 2 187 899
- US-A- 4 504 778
- US-A- 4 870 340
- US-A- 5 072 170

## Description

La présente invention concerne le domaine des gradateurs de puissance destinés à moduler la puissance de fonctionnement d'une charge essentiellement résistive, par exemple une lampe, alimentée par une tension alternative, par exemple la tension du secteur.

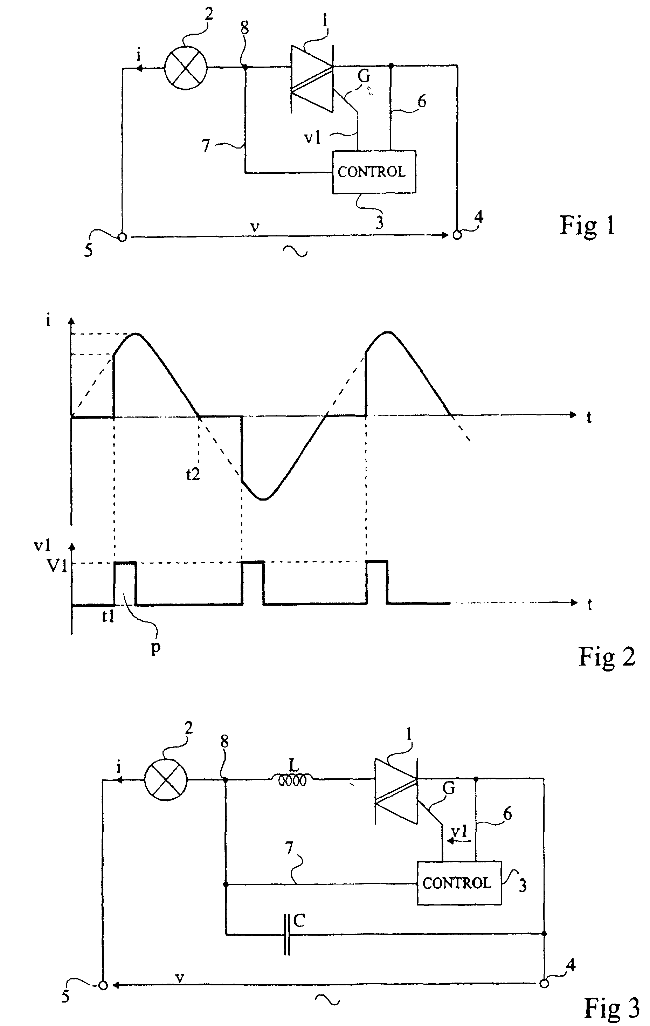

La figure 1 représente un schéma de base d'un gradateur de lumière classique. Un tel gradateur est le plus souvent basé sur l'utilisation d'un triac 1 jouant le rôle d'un commutateur bidirectionnel, ouvert au repos, monté en série avec une lampe 2 à incandescence ou halogène entre deux bornes 4, 5 d'alimentation alternative.

Le triac 1 est commandé par un circuit (CONTROL) 3, dont le rôle est d'envoyer sur la gâchette G du triac 1 des impulsions de fermeture à une fréquence correspondant au double de la fréquence de la tension d'alimentation v. Le circuit 3 est généralement alimenté à partir de la tension alternative au moyen de connexions 6, 7, respectivement à la borne 4 et au point milieu 8 de l'association en série de la lampe 2 et du triac 1. Le circuit 3 est associé à des moyens (non représentés), généralement à commande manuelle, de réglage de l'instant d'apparition des impulsions par rapport au début de chaque alternance de la tension d'alimentation.

Le fonctionnement du gradateur de puissance représenté à la figure 1 est illustré par la figure 2 qui représente, sous forme de chronogrammes, un exemple d'allures du courant i dans la lampe 2 et de la tension v1 de commande du triac 1. Le signal v1 correspond à un train d'impulsions d'amplitude V1.

En l'absence de courant d'amorçage dans la gâchette G du triac 1, celui-ci est bloqué et aucun courant ne circule dans la lampe 2 (en négligeant le courant d'alimentation du circuit 3 qui est très faible en raison de la forte résistance de la lampe 2 et qui n'entraîne aucun allumage de cette dernière).

Au début d'une alternance du secteur (représentée en pointillé à la figure 2), il n'y a donc pas de courant dans la lampe. A un instant t1, correspondant au front montant d'une impulsion P du signal v1, le triac 1 devient conducteur et le courant i dans la lampe croit très rapidement pour suivre la sinusoïde du secteur. Le triac 1 se bloque à la fin de l'alternance (instant t2) et redevient conducteur à l'apparition de l'impulsion suivante du signal v1.

Un problème qui se pose dans un tel gradateur de puissance est que la mise en conduction du triac entraîne des perturbations radioélectriques sur le secteur, en raison des pics de courant qui se produisent à chaque fermeture du triac 1.

Pour résoudre ce problème, on a généralement recours à un filtre inductif et capacitif.

La figure 3 représente un exemple de gradateur de puissance classique pourvu d'un tel filtre.

Une inductance L est intercalée entre la lampe 2 et le triac 1, afin d'adoucir les pics de courant à la fermeture du triac 1. L'inductance L est associée à un condensateur C monté en parallèle sur l'association en série de l'inductance L et du triac 1, c'est-à-dire connecté entre les bornes 4 et 8. Le condensateur C sert à limiter l'énergie dans l'inductance L. L'association de l'inductance L et du condensateur C constitue ce qu'on appelle généralement un filtre secteur.

Un inconvénient du recours à un tel filtre secteur dans un gradateur de puissance, est que l'inductance L est un composant particulièrement encombrant et onéreux. De plus, l'inductance n'est pas intégrable.

Un autre inconvénient est que l'inductance introduit un phénomène de "scintillement" de la lampe lorsque le gradateur est réglé à faible puissance. En effet, à faible puissance, le courant de maintien du triac est supérieur au courant dans l'inductance, ce qui provoque des oscillations à la commutation du triac.

Le document US-A-5 072 170 (D1) décrit des dispositifs de commande de l'angle de phase de charges alimentées en alternatif. Dans un mode de réalisation, il prévoit de rendre bidirectionnel un transistor bipolaire ou un IGBT au moyen d'un pont de diodes. Un élément limiteur de dv/dt à la mise ON et de protection de la mise OFF est prévu à l'intérieur du pont entre les bornes de sortie redressée. Dans un autre mode de réalisation excluant un pont de redressement, il prévoit d'utiliser deux GTOs en antiparallèle.

Le document US-A-4 870 340 (D2) décrit un circuit de commande de charges inductives utilisant deux GTOs, ou un GTO et un pont redresseur.

Le document US-A-4 504 778 (D3) décrit un dispositif de commande d'une charge alimentée en alternatif à base d'un triac. Une résistance est connectée entre la gâchette et une des bornes de puissance d'un triac.

La présente invention vise à proposer un nouveau gradateur de puissance qui pallie aux inconvénients des gradateurs classiques.

La présente invention vise, en particulier, à proposer un nouveau gradateur qui soit moins encombrant qu'un gradateur classique.

La présente invention vise également à maximiser l'intégration d'un tel gradateur.

La présente invention vise, en particulier, à proposer un gradateur de puissance qui, tout en respectant les normes de perturbations radiofréquences admissibles sur le secteur, fonctionne correctement à faible puissance.

Pour atteindre ces objets, la présente invention prévoit un gradateur de puissance d'une charge, alimentée par une tension alternative, du type comportant un commutateur bidirectionnel associé en série avec la charge, dans lequel :
le commutateur est constitué d'un premier thyristor ouvrable par la gâchette, rendu bidirectionnel au moyen d'un pont redresseur dont deux bornes de sortie fournissent une tension alternative redressée, le commutateur étant normalement fermé et commandable en ouverture à chaque alternance de l'alimentation alternative ;
une résistance de forte valeur est placée entre l'anode et la gâchette du premier thyristor ouvrable par la gâchette ;
un signal de commande, constitué d'un train d'impulsions négatives ou nulles à une fréquence correspondant au double de la fréquence de la tension d'alimentation alternative, est appliqué entre la gâchette du premier thyristor et sa cathode, la tension de déclenchement d'une ouverture du premier thyristor étant négative ou nulle ; et
au moins la gâchette du premier thyristor est reliée à la borne de sortie la plus négative du pont redresseur, au moins par l'intermédiaire d'un transistor, dont une borne de commande est reliée au point milieu d'un pont diviseur de tension, dimensionné pour que la tension seuil de mise en conduction du transistor soit supérieure à la tension de fermeture du premier thyristor et connecté entre les deux bornes de sortie du pont redresseur.

L'invention prévoit également un gradateur de puissance d'une charge, alimentée par une tension alternative, du type comportant un commutateur bidirectionnel associé en série avec la charge, dans lequel :
le commutateur est constitué d'un premier thyristor ouvrable par la gâchette, rendu bidirectionnel au moyen d'un pont redresseur dont deux bornes de sortie fournissent une tension alternative redressée, le commutateur étant normalement fermé et commandable en ouverture à chaque alternance de l'alimentation alternative ;
un deuxième thyristor ouvrable par la gâchette est connecté en parallèle sur le premier thyristor, la gâchette du premier thyristor étant reliée à la cathode du deuxième thyristor par l'intermédiaire d'une diode Zener, la gâchette du deuxième thyristor étant reliée, par l'intermédiaire d'une résistance de forte valeur, à sa propre anode, et la cathode du deuxième thyristor étant reliée, par l'intermédiaire d'un condensateur de stockage à la borne de sortie la plus négative du pont redresseur ;
un signal de commande constitué d'un train d'impulsions négatives ou nulles à une fréquence correspondant au double de la fréquence de la tension d'alimentation alternative, est appliqué entre la gâchette du premier thyristor et sa cathode, la tension de déclenchement d'une ouverture du premier thyristor étant négative ou nulle ; et
au moins la gâchette du premier thyristor est reliée à la borne de sortie la plus négative du pont redresseur, au moins par l'intermédiaire d'un transistor, dont une borne de commande est reliée au point milieu d'un pont diviseur de tension, dimensionné pour que la tension seuil de mise en conduction du transistor soit supérieure à la tension de fermeture du premier thyristor et connecté entre les deux bornes de sortie du pont redresseur.

Selon un mode de réalisation de la présente invention, le gradateur comporte un condensateur d'amortissement des pics de commutation à l'ouverture du commutateur, ledit condensateur étant connecté entre deux bornes d'application de la tension alternative.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 et 3 décrites précédemment sont destinées à exposer l'état de la technique et le problème posé ;
la figure 4 représente, de façon schématique, un mode de réalisation d'un gradateur de puissance selon l'invention ;
la figure 5 illustre, sous forme de chronogrammes, le fonctionnement d'un gradateur de puissance selon l'invention ;
la figure 6 représente un premier mode de réalisation d'un commutateur constitutif d'un gradateur de puissance selon l'invention ;
la figure 7 illustre, sous forme de chronogrammes, le fonctionnement d'un circuit tel que représenté à la figure 6 ;
la figure 8 représente le commutateur de la figure 6, associé à un circuit de commande et à un circuit d'alimentation du circuit de commande ; et
les figures 9 et 10 illustrent deux autres modes de réalisation d'un commutateur constitutif d'un gradateur de puissance selon l'invention.

Les mêmes éléments ont été désignés par les mêmes références aux différentes figures. Pour des raisons de clarté, seul les éléments nécessaires à la compréhension de l'invention ont été représentés aux figures et seront décrits par la suite.

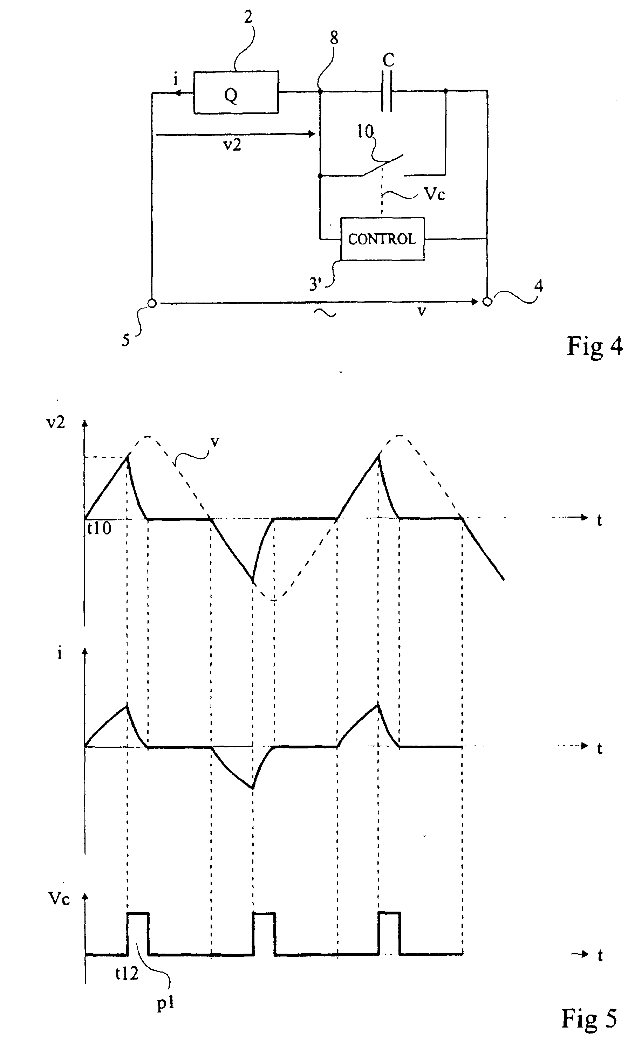

La figure 4 représente, sous forme simplifiée, un premier mode de réalisation d'un gradateur de puissance selon la présente invention.

Comme précédemment, le gradateur est constitué d'un commutateur bidirectionnel 10 monté en série avec une charge 2, entre deux bornes 4 et 5 d'alimentation alternative, par exemple, raccordées au secteur. Le gradateur comporte également un circuit 3' de commande (CONTROL) du commutateur 10, qui délivre, par exemple, un train d'impulsions Vc à une fréquence double de la fréquence de la tension alternative v.

Toutefois, selon la présente invention, le commutateur 10 est un commutateur normalement fermé et commandable en ouverture au moyen du circuit 3'. Ainsi, au lieu de provoquer, au cours de chaque alternance de la tension d'alimentation alternative, la fermeture d'un commutateur autorisant le passage d'un courant dans la charge, la charge est alimentée au début de chaque alternance et le commutateur sert, au cours de chaque alternance, à couper son alimentation pour moduler le courant efficace et, par voie de conséquence, la puissance de la charge.

Un condensateur C est monté en parallèle sur le commutateur 10, c'est-à-dire est raccordé entre la borne 4 et le point milieu 8 de l'association en série de la charge 2 avec le commutateur 10. Le rôle du condensateur C est ici d'amortir la décroissance du courant dans la lampe à l'ouverture du commutateur 10, de façon à ne pas polluer la tension d'alimentation alternative par des perturbations radiofréquences.

La figure 5 illustre le fonctionnement d'un gradateur de puissance, tel que représenté à la figure 4, et représente, sous forme de chronogrammes, un exemple d'allures de la tension v2 aux bornes de la charge 2, du courant i et du signal Vc.

Comme le commutateur 10 est normalement fermé, la conduction démarre sous une tension nulle et la tension v2 suit l'allure de la tension d'alimentation alternative depuis le zéro de tension (instant t10). Ainsi, la croissance du courant i dans la lampe 2 s'effectue sans à-coup. Il n'y a donc pas besoin de filtre inductif pour amortir le courant i. A un instant t12 de chaque alternance, où apparaît une impulsion P' sur le signal Vc, le commutateur 10 s'ouvre et le courant i dans la lampe 2 décroît en étant amorti par le condensateur C. Le commutateur 10 se referme au voisinage de la fin de chaque alternance.

La valeur du condensateur C est choisie en fonction de l'amplitude crête de la tension alternative v. En effet, le point critique de fonctionnement correspond à une ouverture du commutateur 10 à un instant où la tension d'alimentation v est à son maximum d'amplitude. Dans ce cas, le courant dans le condensateur C, qui est nul tant que le commutateur 10 est fermé, devient brusquement un courant maximal. A titre d'exemple particulier, un condensateur de 100 nF convient pour une tension secteur de 220 volts. Une telle valeur de condensateur est parfaitement compatible avec les condensateurs couramment utilisés dans les filtres secteurs.

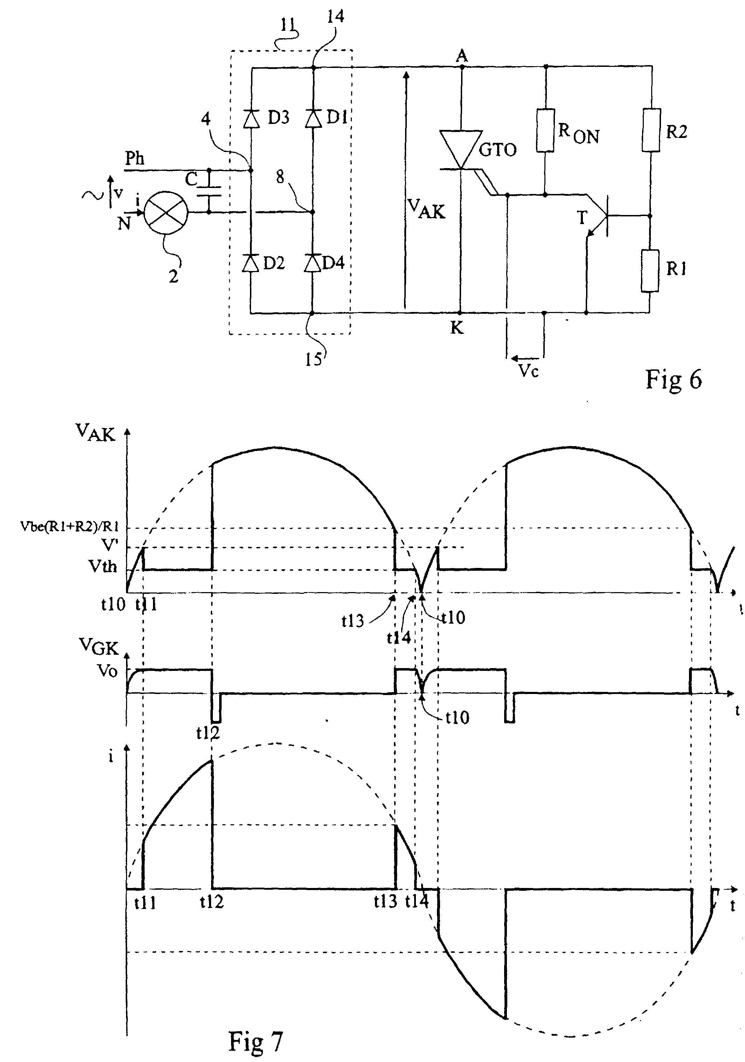

La figure 6 représente un mode de réalisation d'un commutateur bidirectionnel normalement fermé et commandable à l'ouverture selon la présente invention.

Selon ce mode de réalisation, le commutateur 10 est constitué d'un thyristor ouvrable par la gâchette (GTO) associé à un pont redresseur 11. Le pont 11 est, par exemple, constitué d'un pont de diodes D1, D2, D3, D4, comportant deux bornes 4, 8 d'entrée de la tension v et deux bornes 14, 15 délivrant une tension alternative redressée. Dans l'exemple représenté, la borne 4 est connectée à la phase (Ph) de la tension secteur et la borne 8 est reliée, par intermédiaire de la lampe 2, au neutre (N). Les bornes 14 et 15 définissent, respectivement, des bornes positive et de masse, de la tension alternative redressée.

Le thyristor GTO est relié aux bornes 14 et 15, son anode (A) étant reliée à la borne 14. Une résistance Ron est connectée entre l'anode et la gâchette du thyristor GTO, afin de le rendre normalement fermé.

Le thyristor GTO est, de préférence, associé à un transistor, par exemple, un transistor bipolaire T de type NPN dont le collecteur est relié à la gâchette du thyristor GTO et dont l'émetteur est relié à la borne 15. Deux résistances R1 et R2 sont montées en série entre les bornes 14 et 15. Le point milieu de cette association en série est relié à la base du transistor T pour constituer un pont diviseur fixant le potentiel de base du transistor T.

Le rôle du transistor T, associé aux résistances R1 et R2, est de permettre la commande du thyristor GTO à partir d'un signal de commande Vc impulsionnel appliqué entre la gâchette et la cathode K du thyristor GTO.

Dans le cas où le commutateur est destiné à constituer un gradateur de puissance d'une lampe 2, un condensateur C d'amortissement des pics de courant à l'ouverture du thyristor GTO est, par exemple, connecté entre les bornes 4 et 8. On notera que le condensateur de la figure 6 peut être remplacé par un montage classique (non représenté) utilisant un condensateur en série avec une diode entre les bornes 15 et 14, une résistance de faible valeur étant alors montée en parallèle sur cette diode. Dans ce cas, la résistance R2 n'est pas reliée à la borne 14 mais est reliée aux bornes 4 et 8 par l'intermédiaire de diodes additionnelles, pour que la tension aux bornes des résistances R1 et R2 puisse suivre l'allure de la tension alternative redressée.

Le fonctionnement d'un commutateur tel que représenté à la figure 6 sera décrit par la suite en relation avec la figure 7 qui représente, sous forme de chronogrammes, un exemple d'allures de la tension V_{AK} aux bornes (anode-cathode) du thyristor GTO, de la tension V_{GK} entre la gâchette et la cathode du thyristor GTO et du courant i dans la lampe 2, pendant une période de la tension alternative v d'alimentation.

Par souci de simplification, la représentation de la figure 7 ne tient pas compte de la présence du condensateur C. On notera simplement que ce condensateur adoucit les fronts de la tension V_{AK} et du courant i qui seront décrits par la suite.

Pour des raisons de clarté, on a exagéré les amplitudes des tensions caractéristiques de fonctionnement du commutateur représenté à la figure 6, par rapport à l'amplitude de la tension alternative du secteur. On notera toutefois que ces tensions (de l'ordre de 1 à 20 volts) sont en pratique très nettement inférieures à la tension alternative d'alimentation (par exemple, 220 volts).

Au début d'une alternance (instant t10), un courant circule dans la résistance Ron, et de la gâchette du thyristor GTO à sa cathode. Dès que la tension V_{AK} atteint (instant t11) une tension V' = Ron.Igt + V0, où Igt représente le courant d'amorçage du thyristor GTO et où V0 représente une tension positive correspondant à la tension gâchette-cathode du thyristor GTO à l'état fermé, fixant la tension de repos du signal Vc, le thyristor GTO se ferme. A l'instant t11, la tension V_{AK} chute à la valeur Vth (de l'ordre du volt) correspondant à la tension seuil du thyristor GTO et un courant circule dans la lampe 2.

Le signal de commande Vc est constitué d'un train d'impulsions négatives ou nulles à une fréquence double de la fréquence de la tension alternative d'alimentation.

On suppose qu'à un instant t12 le signal Vc présente une impulsion négative de courte durée. La durée de l'impulsion est fixée pour permettre l'extraction de tous les porteurs de la gâchette du thyristor GTO afin de l'ouvrir. Le potentiel négatif ou nul de l'impulsion est fixé en fonction du courant qu'est destiné supporter le thyristor GTO afin de permettre l'extraction des porteurs de sa gâchette.

Le thyristor GTO s'ouvre donc à l'instant t12 et le courant dans la lampe disparaît. La tension V_{AK} rejoint alors l'allure de la tension alternative redressée et devient supérieure à Vbe(R1+R2)/R1, où Vbe représente la chute de tension base-émetteur du transistor T. A cet instant, le transistor T se sature et maintient la tension V_{GK} à une valeur proche de 0 volt (en réalité à la tension collecteur-émetteur de saturation du transistor bipolaire), indépendamment de la tension de commande Vc.

Le transistor T se bloque au voisinage de la fin de l'alternance, au moment (instant t13) où la tension V_{AK} redevient inférieure à Vbe(R1+R2)/R1. Comme l'impulsion du signal Vc a disparu, le thyristor GTO se remet à conduire. Le thyristor GTO reste fermé jusqu'à ce que la tension V_{AK} devienne inférieure à sa tension seuil Vth (instant t14), puis le courant recircule à travers la résistance Ron, la gâchette et la cathode du thyristor GTO jusqu'à la fin de l'alternance et au début de l'alternance suivante, où le fonctionnement décrit ci-dessus est reproduit. Un faible courant circule dans la lampe entre les instants t13 et t14.

Pour que le montage fonctionne correctement, les conditions suivantes doivent être respectées.

Une première condition de fonctionnement est que la tension V' (Ron.Igt + V0) doit être inférieure à la tension Vbe(R1+R2)/R1, afin que le thyristor GTO soit rendu conducteur au début de chaque alternance, avant que le transistor T soit conducteur. Dans le cas contraire, le thyristor GTO est en permanence bloqué.

Une deuxième condition est que la résistance Ron soit de valeur importante, pour protéger la gâchette du thyristor GTO en cas de mise sous tension au milieu d'une alternance, et pour que le potentiel V0 puisse être faible (de préférence, inférieur à 20 volts), afin que le thyristor GTO se ferme le plus près possible du zéro de tension.

Une troisième condition est que la durée d'une impulsion du signal Vc doit être suffisante pour que le transistor T soit conducteur, c'est-à-dire que la tension V_{AK} atteigne la tension Vbe(R1+R2)/R1, avant que l'impulsion du signal Vc disparaisse. Cette condition n'est pas illustrée par la figure 7 dans la mesure où on a négligé l'effet du condensateur C. Bien entendu, en présence du condensateur C, le pic de la tension V_{AK} à l'instant t12 est amorti, ce qui conditionne la largeur de l'impulsion du signal Vc.

Pour allumer la lampe 2 à pleine puissance, les impulsions du signal Vc interviennent le plus près possible de la fin de chaque alternance.

Pour un fonctionnement à puissance minimale, les impulsions du signal Vc sont le plus près possible du début de chaque alternance. Si le circuit de commande est conçu pour permettre que les instants t10 et t12 puissent être confondus, la largeur des impulsions du signal Vc devra être supérieure à l'intervalle de temps nécessaire pour que la tension V_{AK} atteigne la tension Vbe(R1+R2)/R1 afin que le thyristor GTO reste bloqué jusqu'à la fin de l'alternance.

A titre de variante de réalisation, on pourra se dispenser de l'utilisation du transistor T et des résistances R1 et R2 en prévoyant un signal de commande non plus impulsionnel, mais restant à l'état bas (0 volt ou négatif) jusqu'à la fin de chaque alternance.

Toutefois, un avantage du mode de réalisation illustré par la figure 6 est qu'il permet de préserver la commande impulsionnelle classique d'un gradateur de puissance.

Un avantage de la présente invention est que le gradateur de puissance est de poids et de volume réduit en raison de l'absence de matière ferromagnétique (par d'éléments inductifs). Tous les constituants du gradateur, à l'exception du condensateur C, sont intégrables.

Un autre avantage de la présente invention est que le commutateur ne crée pas d'oscillations lors de la commutation à faible puissance, contrairement à un commutateur classique nécessitant un filtre secteur.

Un autre avantage de la présente invention est que le gradateur de puissance possède une commande qui est essentiellement basée sur des composants simples basse tension.

Le gradateur de puissance peut se présenter sous la forme d'un dipôle, ce qui simplifie le câblage d'un tel gradateur réalisé sous forme intégrée. Pour ce faire, il faut que le gradateur intègre un circuit (3', figure 4) pour générer le signal de commande Vc en prélevant l'alimentation nécessaire à ce circuit sans nécessiter de connexion supplémentaire à la tension d'alimentation alternative.

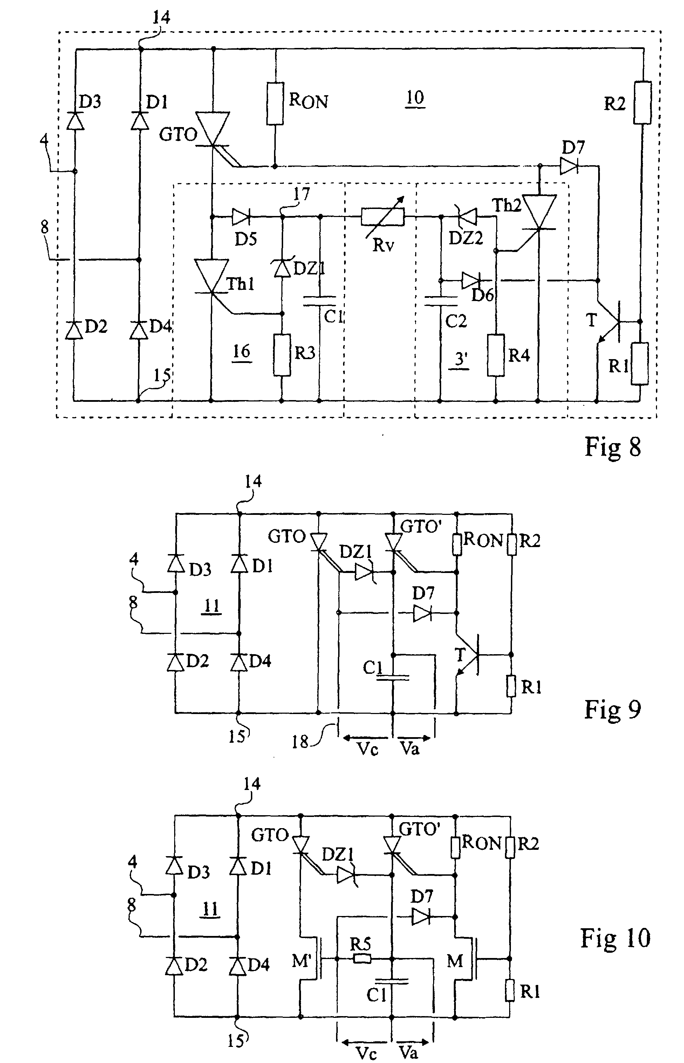

La figure 8 représente un mode de réalisation d'un gradateur de puissance selon la présente invention, reprenant le montage de la figure 6, et complété par un circuit 3' de génération des impulsions nécessaires à la commande du thyristor GTO et par un moyen 16 d'alimentation du circuit 3'.

Dans ce mode de réalisation, la cathode du thyristor GTO est désormais connectée à la borne 15 par l'intermédiaire d'un thyristor TH1 à gâchette de cathode. La gâchette du thyristor TH1 est reliée à l'anode d'une diode zener DZ1 dont la cathode est reliée à la cathode du thyristor GTO par l'intermédiaire d'une diode D5. Un condensateur de stockage C1 est connecté entre l'anode 17 de la diode DZ1 et borne 15. Le condensateur C1 constitue un moyen d'alimentation du circuit de commande 3'.

La borne 17 est reliée, par l'intermédiaire d'une résistance variable Rv, à une première borne d'un condensateur C2, dont une deuxième borne est connectée à la borne 15. La première borne du condensateur C2 est également reliée, par l'intermédiaire d'une diode zener DZ2, à la gâchette d'un thyristor TH2, dont l'anode est reliée à la gâchette du thyristor GTO et dont la cathode est reliée à la borne 15.

La charge (2, figure 6) et le condensateur (C, figure 6) d'amortissement des fronts de commutation du thyristor GTO n'ont pas été représentés à la figure 8.

Le condensateur C1 se charge au début de chaque alternance tant que la tension à ses bornes n'a pas atteint la tension seuil de la diode zener DZ1. Quand la diode DZ1 entre en avalanche, le thyristor TH1 devient conducteur et le courant traversant le thyristor GTO circule alors à travers ce thyristor TH1. Ce fonctionnement se reproduit à chaque alternance de la tension d'alimentation alternative, de sorte que le condensateur C1 présente à ses bornes, en régime établi, une tension à peu près constante correspondant à la tension seuil de la diode zener DZ1.

L'instant (t12, figure 7) d'apparition d'une impulsion de commande en ouverture du thyristor GTO est réglé par la résistance variable Rv qui conditionne la constante de temps de la cellule RC constituée de cette résistance Rv et du condensateur C2. Quand la tension aux bornes du condensateur C2 devient supérieure à la tension seuil de la diode zener DZ2, celle-ci entre en avalanche et provoque la mise en conduction du thyristor TH2 afin de provoquer l'ouverture du thyristor GTO par extraction des porteurs de sa gâchette.

La valeur du condensateur C2 est nettement inférieure à la valeur du condensateur C1, de sorte que la tension aux bornes du condensateur C1 reste sensiblement stable. On notera que les condensateurs C1 et C2 sont des condensateurs basse tension. La tension seuil de la diode zener DZ2 est choisie pour être inférieure à la tension seuil de la diode zener DZ1, afin que la diode DZ2 puisse entrer en avalanche par la décharge du condensateur C1.

La durée d'une impulsion est fixée par le temps que met le thyristor TH2, quand il est passant, à extraire tous les porteurs de la gâchette du thyristor GTO. Une fois que tous ces porteurs ont été extraits, le thyristor TH2 s'ouvre. On notera que la résistance Ron est suffisamment grande pour que le courant qui la traverse soit inférieur au courant de maintien du thyristor TH2 afin que ce dernier puisse s'ouvrir.

Une diode D6, montée entre l'anode de la diode zener DZ2 et le collecteur du transistor T, décharge le condensateur C2 quand le transistor T devient passant. Ainsi, l'intervalle de temps, entre le début d'une alternance et l'instant t12 d'apparition d'une impulsion du signal Vc, est maintenu constant pour une valeur donnée de la résistance Rv, la charge du condensateur C2 étant nulle au début de chaque alternance. Une diode D7, placée entre l'anode du thyristor TH2 et le collecteur du transistor T, empêche un bouclage du courant par l'intermédiaire de la diode D6 jusqu'à la gâchette du thyristor GTO.

Des résistances R3 et R4 reliant les gâchettes respectives des thyristors TH1 et TH2 à la borne 15 peuvent être prévues. Le recours à de telles résistances dépend des caractéristiques des thyristors TH1 et TH2 choisis et, en particulier, de leurs résistances de gâchette respectives.

A titre d'exemple particulier de réalisation, un circuit tel que représenté à la figure 8 peut être réalisé en utilisant les valeurs suivantes pour les différents composants :
R1 = 4,7 kΩ ;
R2 = 220 kΩ ;
Ron = 82 kΩ ;
R3 = 75 Ω ;
R4 = 10 kΩ ;
C1 = 220 µF ;
C2 = 220 nF ;
Rv est un potentiomètre de 47 kΩ monté en série avec une résistance fixe (non représentée) de 2,2 kΩ ;
DZ1 = 13 volts ; et
DZ2 = 7,5 volts.

Avec de telles valeurs, et pour une tension d'alimentation alternative de 220 volts et un courant efficace de 3A, la durée des impulsions du signal Vc est de l'ordre de 100 µs.

La figure 9 représente un deuxième mode de réalisation d'un commutateur bidirectionnel, normalement fermé et commandable en ouverture, selon la présente invention.

Selon ce mode de réalisation, on utilise un deuxième thyristor ouvrable par la gâchette (GTO') pour générer la tension d'alimentation Va destiné au circuit de commande (non représenté).

Le thyristor GTO est, comme dans le mode de réalisation illustré par la figure 6, connecté entre les bornes 14 et 15 du pont redresseur. L'anode du thyristor GTO' est reliée à la borne 14 et sa cathode est reliée, par l'intermédiaire du condensateur de stockage C1, à la borne 15. Une diode zener DZ1 est connectée entre la gâchette du thyristor GTO et la cathode du thyristor GTO'.

La gâchette du thyristor GTO (anode de la diode DZ1) constitue une borne 18 positive d'application d'un signal de commande Vc impulsionnel. Le circuit de génération du signal Vc n'a pas été représenté à la figure 9. Il pourra s'agir d'un circuit tel qu'illustré par la figure 8 ou de tout autre montage classique adapté.

Une diode D7 est connectée entre la gâchette du thyristor GTO et le collecteur du transistor bipolaire T, dont l'émetteur est connecté à la borne 15 et dont la base est reliée au point milieu de l'association en série des résistances R1 et R2. La résistance Ron est désormais placée entre l'anode et la gâchette du thyristor GTO' additionnel, également reliée au collecteur du transistor T.

Le fonctionnement d'un montage tel que représenté à la figure 9 se déduit des fonctionnements exposés en relation avec les figures 6 et 8. Les composants qui ont été désignés à la figure 9 avec les mêmes références que des composants de la figure 8 remplissent la même fonction. Ainsi, la diode DZ1 fixe la tension aux bornes du condensateur de stockage C1. Au début de chaque alternance, le circuit de conduction de la charge (non représentée) est cependant ici fermé par le thyristor GTO'. Une fois que la diode DZ1 est entrée en avalanche, le thyristor GTO est fermé et le courant de la charge circule alors à travers ce thyristor GTO. Comme précédemment, le thyristor GTO est ouvert par une impulsion négative ou nulle du signal Vc et est maintenu ouvert jusqu'au voisinage de la fin de l'alternance, indépendamment de l'allure du signal Vc, au moyen du transistor T en saturation jusqu'au voisinage de la fin de l'alternance.

Un avantage du mode de réalisation représenté à la figure 9 est qu'il minimise la dissipation d'énergie pendant les périodes ou le thyristor GTO est fermé. En effet, le courant traversant la charge n'a plus besoin de circuler dans un des constituants du circuit d'alimentation (le thyristor TH1 à la figure 8). Le thyristor GTO est désormais en parallèle sur le thyristor (ici, le thyristor GTO') associé à la charge du condensateur C1 du circuit d'alimentation.

Un autre avantage d'un tel mode de réalisation est qu'il permet d'utiliser un composant existant, constitué de deux thyristors ouvrables par la gâchette et d'une diode zener reliant la gâchette d'un premier thyristor à la cathode d'un deuxième thyristor. Un tel composant est, par exemple, fabriqué par la société SGS-THOMSON MICROELECTRONICS sous la dénomination commerciale EFS.

La figure 10 représente une variante du mode de réalisation illustré par la figure 9, dans lequel le transistor bipolaire T est remplacé par un transistor MOS M. Le fonctionnement du circuit n'est pas altéré par une telle modification.

A la figure 10, une autre variante est illustrée. Il s'agit de l'adjonction d'un deuxième transistor MOS M' en série avec le thyristor GTO. Le rôle de ce transistor M' est de former un montage de type cascode avec le thyristor GTO, de façon à accroître le pouvoir de coupure du thyristor GTO, ce qui permet un fonctionnement à plus grande puissance. Pour la réalisation d'un tel montage, une résistance R5 est intercalée entre la grille du transistor M' et la gâchette du thyristor GTO et le signal Vc est appliqué sur la grille du transistor M'.

Bien entendu, la présente invention est susceptible de diverses variantes et modifications qui apparaîtront à l'homme de l'art. En particulier, le dimensionnement des différents composants dépendra de l'application à laquelle est destiné le gradateur de puissance et, en particulier, de la puissance maximale qu'il est sensé supporter.

## Revendications

1. Gradateur de puissance d'une charge (2), alimentée par une tension alternative (v), du type comportant un commutateur (10) bidirectionnel associé en série avec la charge, **caractérisé en ce que** :
le commutateur (10) est constitué d'un premier thyristor ouvrable par la gâchette (GTO), rendu bidirectionnel au moyen d'un pont redresseur (11) dont deux bornes (14, 15) de sortie fournissent une tension alternative redressée, le commutateur étant normalement fermé et commandable en ouverture à chaque alternance de l'alimentation alternative ;
une résistance (Ron) de forte valeur est placée entre l'anode et la gâchette du premier thyristor ouvrable par la gâchette (GTO) ;
un signal de commande (Vc), constitué d'un train d'impulsions négatives ou nulles à une fréquence correspondant au double de la fréquence de la tension d'alimentation alternative (v), est appliqué entre la gâchette du premier thyristor (GTO) et sa cathode, la tension de déclenchement d'une ouverture du premier thyristor (GTO) étant négative ou nulle ; et
au moins la gâchette du premier thyristor (GTO) est reliée à la borne (15) de sortie la plus négative du pont redresseur (11), au moins par l'intermédiaire d'un transistor (T, M), dont une borne de commande est reliée au point milieu d'un pont diviseur de tension (R1, R2), dimensionné pour que la tension seuil de mise en conduction du transistor (T, M) soit supérieure à la tension (V') de fermeture du premier thyristor (GTO) et connecté entre les deux bornes (14, 15) de sortie du pont redresseur (11).

2. Gradateur de puissance d'une charge (2), alimentée par une tension alternative (v), du type comportant un commutateur (10) bidirectionnel associé en série avec la charge, **caractérisé en ce que** :
le commutateur (10) est constitué d'un premier thyristor ouvrable par la gâchette (GTO), rendu bidirectionnel au moyen d'un pont redresseur (11) dont deux bornes (14, 15) de sortie fournissent une tension alternative redressée, le commutateur étant normalement fermé et commandable en ouverture à chaque alternance de l'alimentation alternative ;
un deuxième thyristor ouvrable par la gâchette (GTO') est connecté en parallèle sur le premier thyristor (GTO), la gâchette du premier thyristor étant reliée à la cathode du deuxième thyristor par l'intermédiaire d'une diode Zener (DZ1), la gâchette du deuxième thyristor étant reliée, par l'intermédiaire d'une résistance (Ron) de forte valeur, à sa propre anode, et la cathode du deuxième thyristor étant reliée, par l'intermédiaire d'un condensateur de stockage (C1) à la borne (15) de sortie la plus négative du pont redresseur (11) ;
un signal de commande (Vc) constitué d'un train d'impulsions négatives ou nulles à une fréquence correspondant au double de la fréquence de la tension d'alimentation alternative (v), est appliqué entre la gâchette du premier thyristor (GTO) et sa cathode, la tension de déclenchement d'une ouverture du premier thyristor (GTO) étant négative ou nulle ; et
au moins la gâchette du premier thyristor (GTO) est reliée à la borne (15) de sortie la plus négative du pont redresseur (11), au moins par l'intermédiaire d'un transistor (T, M), dont une borne de commande est reliée au point milieu d'un pont diviseur de tension (R1, R2), dimensionné pour que la tension seuil de mise en conduction du transistor (T, M) soit supérieure à la tension (V') de fermeture du premier thyristor (GTO) et connecté entre les deux bornes (14, 15) de sortie du pont redresseur (11).

3. Gradateur de puissance selon la revendication 1 ou 2, **caractérisé en ce qu'**il comporte un condensateur (C) d'amortissement des pics de commutation à l'ouverture du commutateur (10), ledit condensateur étant connecté entre deux bornes (4, 8) d'application de la tension alternative.

## Patentansprüche

1. Leistungsstufenregler (Dimmer) für eine mit einer Wechselspannung (v) gespeiste Verbraucherlast (2), vom Typ mit einem dem Verbraucher in Reihenschaltung zugeordneten bidirektionalen Umschalter (Kommutator),
**dadurch gekennzeichnet daß**
der Umschalter (10) von einem ersten Thyristor mit Gate-Abschaltung (Gate-turn-off transistor) (GTO) gebildet wird, der durch eine Gleichrichtbrücke (11) bidirektional gemacht ist, welche an zwei Ausgangsanschlüssen (14, 15) eine gleichgerichtete Wechselspannung abgibt, wobei der Kommutator normalerweise geschlossen ist und bei jeder Halbwelle der Speisewechselspannung in den Öffnungszustand umsteuerbar ist;
zwischen der Anode und dem Gate des ersten Thyristors mit Gate-Abschaltung (GTO) ein Widerstand (Ron) hohen Betrags angeordnet ist;
ein Steuersignal (Vc), das aus einer Folge von negativen Impulsen oder Impulsen mit Betrag Null mit einer dem Doppelten der Frequenz der Speisewechselspannung (v) entsprechenden Frequenz besteht, zwischen dem Gate des ersten Thyristors (GTO) und seiner Kathode angelegt wird, wobei die Auslöse- bzw. Triggersspannung für die Öffnung bzw. Abschaltung des ersten Transistors (GTO) negativ ist oder den Betrag Null besitzt; sowie
wenigstens das Gate des ersten Thyristors (GTO) mit dem negativsten Ausgangsanschluß (15) der Gleichrichtbrücke (11) über wenigstens einen Transistor (T, M) verbunden ist, von dem ein Steueranschluß mit einem Mittelpunkt einer Spannungsteilerbrücke (R1, R2) verbunden ist, die so bemessen ist, daß die Schwellspannung für den Übergang des Transistors (T, M) in dessen leitenden Zustand größer als die Schließspannung (V') des ersten Thyristors (GTO) ist und zwischen den beiden Ausgangsanschlüssen (14, 15) der Gleichrichtbrücke (11) angeschlossen ist.

2. Leistungsstufenregler (Dimmer) für eine mit einer Wechselspannung (v) gespeiste Verbraucherlast (2), vom Typ mit einem dem Verbraucher in Reihenschaltung zugeordneten bidirektionalen Umschalter (Kommutator),
**dadurch gekennzeichnet, daß**
der Umschalter (10) von einem ersten Thyristor mit Gate-Abschaltung ('gate-turn-off-thyristor') (GT0) gebildet wird, der durch eine Gleichrichtbrücke (11) bidirektional gemacht ist, welche an zwei Ausgangsanschlüssen (14, 15) eine gleichgerichtete Wechselspannung abgibt, wobei der Kommutator normalerweise geschlossen ist und bei jeder Halbwelle der Speisewechselspannung in den Öffnungszustand umsteuerbar ist;
ein zweiter Thyristor mit Gate-Abschaltung ('Gate-offthyristor') (GTO') parallel zu dem ersten Thyristor (GTO) angeschlossen ist, das Gate des ersten Transistors mit der Kathode des zweiten Transistors über eine Zenerdiode (DZ1) verbunden ist, das Gate des zweiten Thyristors über einen Widerstand (Ron) hohen Betrags mit seiner eigenen Anode verbunden ist und die Kathode des zweiten Thyristors über einen Speicherkondensator (C1) mit dem negativsten Ausgangsanschluß (15) der Gleichrichtbrücke (11) verbunden ist;
ein Steuersignal (Vc), das aus einer Folge von negativen Impulsen oder Impulsen mit Betrag Null mit einer dem Doppelten der Frequenz der Speisewechselspannung (v) entsprechenden Frequenz besteht, zwischen dem Gate des ersten Transistors (GTO) und seiner Kathode angelegt wird, wobei die Auslöse-bzw. Triggerspannung für eine Öffnung bzw. Abschaltung des ersten Thyristors (GTO) negativ oder Null ist; sowie
wenigstens das Gate des ersten Transistors (GTO) mit dem negativsten Ausgangsanschluß (15) der Gleichrichtbrücke (11) über wenigstens einen Transistor (T, M) verbunden ist, von dem ein Ausgangsanschluß mit dem Mittelpunkt einer Spannungsteilerbrücke (R1, R2) verbunden ist, die so bemessen ist, daß die Schwellspannung für den Übergang des Transistors (T, M) in den leitenden Zustand größer als die Schließspannung (V') des ersten Thyristors (GTO) ist und zwischen den beiden Ausgangsanschlüssen (14, 15) der Gleichrichtbrücke angeschlossen ist.

3. Leistungsstufenregler (Dimmer) nach Anspruch 1 oder Anspruch 2, **dadurch gekennzeichnet, daß** der Regler einen Kondensator (C) zur Dämpfung der Umschalt-Peaks bei Öffnen des Kommutators (10) aufweist, wobei dieser Kondensator zwischen den beiden Anschlüssen (4, 8) für die Zufuhr der Wechselspannung angeschlossen ist.

## Claims

1. A power dimmer for a load (2) powered by an a.c. voltage (v), of the type including a bidirectional switch (10) connected in series with the load, **characterized in that**:
the switch (10) is formed of a first gate turn-off thyristor (GTO), made bidirectional by means of a rectifying bridge (11), two output terminals (14, 15) of which issue a rectified a.c. voltage, the switch being normally closed and controllable to be opened upon each halfwave of the a.c. supply voltage;
a resistor (Ron) of high value is placed between the anode and the gate of the first gate turn-off thyristor (GTO);
a control signal (Vc), comprising a train of negative or null pulses at a frequency corresponding to twice the a.c. supply voltage frequency (v), is applied between the gate and the cathode of the first thyristor (GTO), the turn-off voltage of the first thyristor (GTO) being negative or null; and
at least the gate of the first thyristor (GTO) is connected to the most negative output terminal (15) of the rectifying bridge (11), at least via a transistor (T, M), a control terminal of which is connected to the midpoint of a resistive dividing bridge (R1, R2) sized so that the threshold turn-on voltage of the transistor (T, M) is higher than the turn-on voltage (V') of the first thyristor (GTO) and connected between the two output terminals (14, 15) of the rectifying bridge (11).

2. A power dimmer for a load (2) powered by an a.c. voltage (v), of the type including a bidirectional switch (10) connected in series with the load, **characterized in that**:
the switch (10) is formed of a first gate turn-off thyristor (GTO), made bidirectional by means of a rectifying bridge (11), two output terminals (14, 15) of which issue a rectified a.c. voltage, the switch being normally closed and controllable to be opened upon each halfwave of the a.c. supply voltage;
a second gate turn-off thyristor (GTO') in parallel on the first thyristor (GTO), the gate of the first thyristor being connected to the cathode of the second thyristor via a zener diode (DZ1), the gate of the second thyristor being connected, via a resistor (Ron) of high value, to its own anode, and the cathode of the second thyristor being connected, via a storage capacitor (C1), to the most negative output terminal (15) of the rectifying bridge (11);
a control signal (Vc), comprising a train of negative or null pulses at a frequency corresponding to twice the a.c. supply voltage frequency (v), is applied between the gate and the cathode of the first thyristor (GTO), the turn off voltage of the first thyristor (GTO) being negative or null; and
at least the gate of the first thyristor (GTO) is connected to the most negative output terminal (15) of the rectifying bridge (11), at least via a transistor (T, M), a control terminal of which is connected to the midpoint of a resistive dividing bridge (R1, R2) sized so that the threshold turn-on voltage of the transistor (T, M) is higher than the turn-on voltage (V') of the first thyristor (GTO) and connected between the two output terminals (14, 15) of the rectifying bridge (11).

3. The power dimmer of claim 1 or 2, **characterized in that** it includes a capacitor (C) for damping the switching peaks upon opening of the switch (10), said capacitor being connected between two terminals (4, 8) of the a.c. power supply.
